(19) Europäisches Patentamt / European Patent Office / Office européen des brevets

(11) **EP 1 983 487 A2**

(12) **EUROPEAN PATENT APPLICATION**

(43) Date of publication:
**22.10.2008 Bulletin 2008/43**

(51) Int Cl.:
**G06T 17/40** (2006.01)

(21) Application number: **08007216.8**

(22) Date of filing: **11.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.04.2007 JP 2007105359**

(71) Applicant: **FUJIFILM Corporation**
**Minato-ku**
**Tokyo (JP)**

(72) Inventors:
• **Masamoto, Jun**
  **Chiba (JP)**
• **Moriyama, Noriyuki**
  **Chiba (JP)**
• **Miyamoto, Masaki**
  **Tokyo (JP)**
• **Yamamoto, Shuji**
  **Tokyo (JP)**

(74) Representative: **Klunker . Schmitt-Nilson . Hirsch**
**Winzererstrasse 106**
**80797 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **Projection image generation apparatus and method and computer-readable recording medium**

(57)  A structure that is perpendicular to the inner wall of a tubular hollow object can be easily observed in the depth direction by using a developed view / slice view. When the developed view (DV) or slice view (SV) is generated from a plurality of viewpoints ($VP_m$) (m = 1, 2, ..., M) on an arbitrary curved line (CL) or curved surface (CS) in a three-dimensional image (V), an angle ($\theta_{mn}$) formed by a tangent vector ($TV_m$) at each of viewpoints ($VP_m$) and a view-line vector ($R_{mn}$) (m = 1,2, ..., N) at the viewpoint ($VP_m$) is set at an acute angle or an obtuse angle with respect to at least a part of view-line vectors ($R_{mn}$).

**FIG.1**

**EP 1 983 487 A2**

**Description**

BACKGROUND OF THE INVENTION

Field of the Invention

The present invention relates to three-dimensional image processing. Particularly, the present invention relates to an apparatus and a method for generating a developed view (a development view, an unfolded view, a developed image or the like) of a structure that is viewed from an arbitrary curved line or curved surface in a three-dimensional image by developing the structure onto a plane. Further, the present invention relates to a computer-readable recording medium stored therein a program for causing a computer to execute the method.

Description of the Related Art

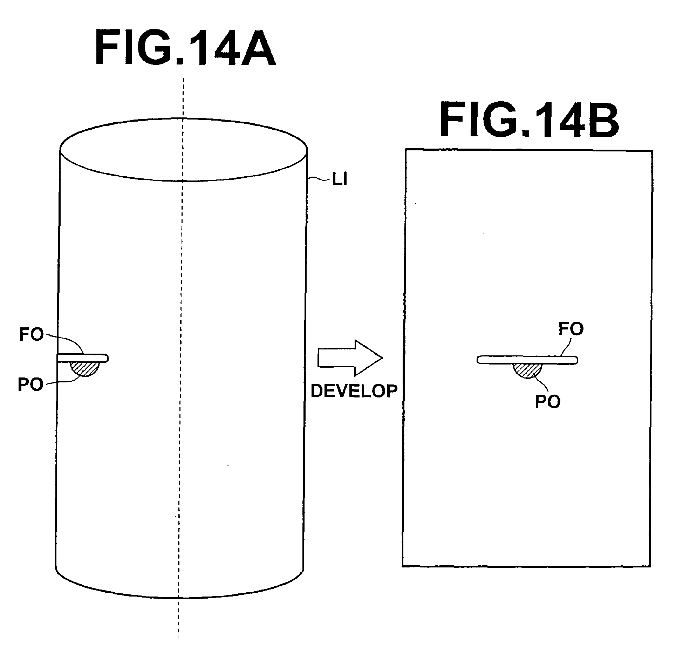

In the field of three-dimensional medical image processing, a method for generating an image as if the inner-wall side of a tubular hollow organ is developed onto a plane by cutting it open is well known. Such an image is generated to make it possible to easily observe a wide range of inner wall of the tubular hollow organ.
For example, a method for displaying a panorama image of a tubular hollow organ is well known (for example, Japanese Unexamined Patent Publication No. 8(1996) -249492) . In the method, a projection image of the tubular hollow organ is generated by radiating rays, from each of viewpoints that are continuously distributed on the core line of the tubular hollow organ, within a plane that is orthogonal to the tangential line at the viewpoint and by directly projecting a projection target onto a short cylindrical projection surface, the axis of which is the tangential line. Further, a multiplicity of cylindrical projection surfaces are connected to each other to generate the projection image along the curved line and the projection result is developed onto a projection plane.
In the aforementioned method, there is a possibility that an artifact or an unprojected portion is generated at a sharply curved portion of the tubular hollow organ. Therefore, a method using nonlinear ray casting has been proposed to reduce generation of the artifact and the unprojected portion (for example, Japanese Unexamined Patent Publication No. 2006-065397). In the method using the nonlinear ray casting, when rays are radiated from each of viewpoints, the rays are not radiated within a plane orthogonal to the tangential line at each of the viewpoints. The rays are radiated in such a manner to be orthogonal to the tangential line in the vicinity of the viewpoint but to be bent when the rays are away from the viewpoint.
In the aforementioned conventional developed-view generation methods, a view-line (a line of view or the direction of view) is set in such a manner to be perpendicular to the inner wall of the tubular hollow organ. Therefore, it has been difficult to observe the depth-direction condition of a structure that is perpendicular to the inner wall. For example, when polyp P0 is present on the side wall of fold F0, which is perpendicular to the inner wall of large intestine LI, as illustrated in Figure 14A, it is very difficult to observe the depth-direction condition of the fold F0 of the large intestine LI by using a developed view illustrated in Figure 14B. Therefore, it becomes very difficult to accurately identify the position, shape and size of the polyp P0.

SUMMARY OF THE INVENTION

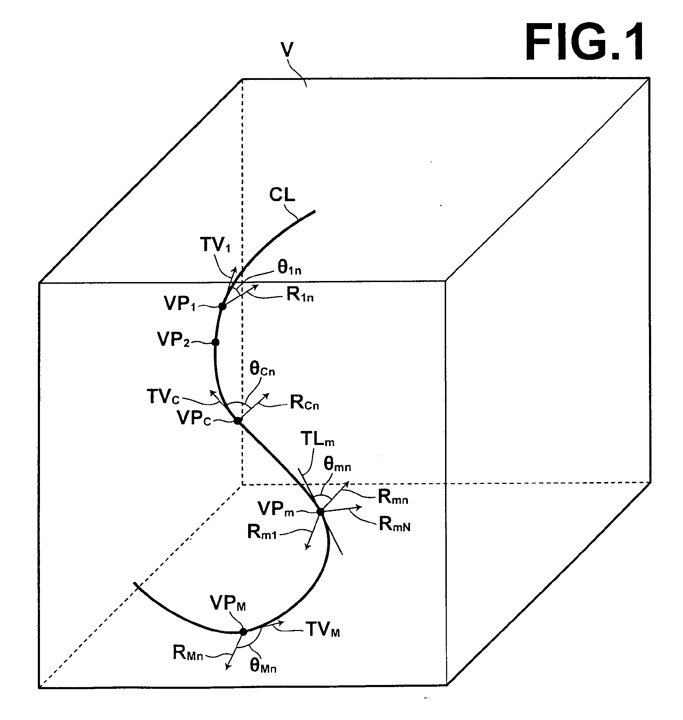

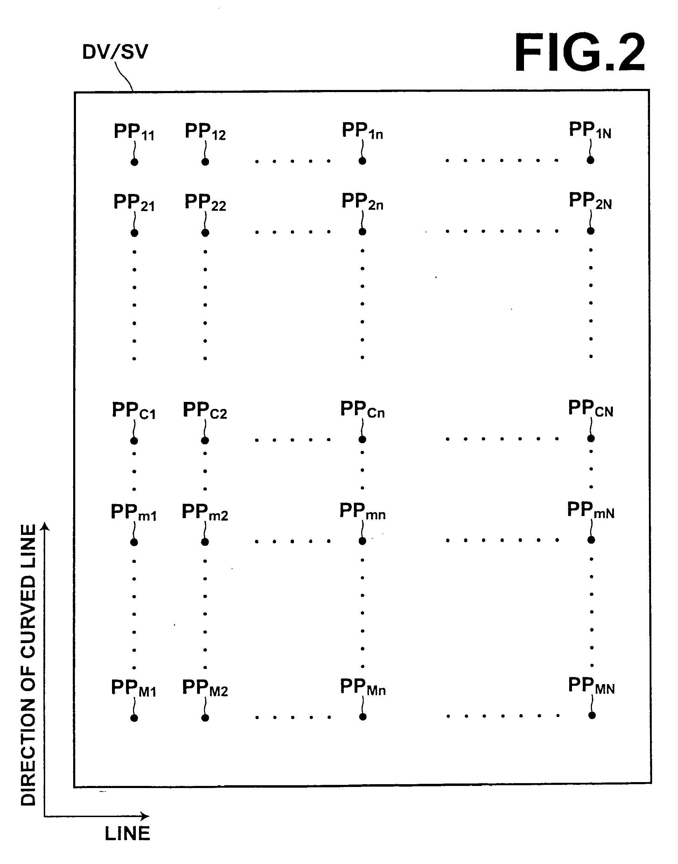

In view of the foregoing circumstances, it is an object of the present invention to provide a projection image generation apparatus and method for facilitating depth-direction observation of a structure that is perpendicular to the inner wall of a tubular hollow organ. Further, it is an object of the present invention to provide a computer-readable recording medium recorded therein a projection image generation program.
Projection images generated in the present invention are a developed view and a slice view (cross-sectional view or image). The present invention will be described below for each of the developed view and the slice view.
As an example is schematically illustrated in Figures 1 and 2, a developed-view generation method of the present invention is a developed-view generation method comprising the steps of:

determining, at each of a plurality of viewpoints ($VP_m$; m = 1, 2, ...) on an arbitrary curved line (CL) in a three-dimensional image (V), the pixel values of projection pixels ($PP_{mn}$) onto which a structure on a plurality of view-line vectors ($R_{mn}$; n = 1, 2, ...), the structure being represented by the three-dimensional image, is projected by using information about images on the view-line vectors ($R_{mn}$) and/or images in the vicinities of the view-line vectors ($R_{mn}$) for the plurality of view-line vectors ($R_{mn}$) that have a starting point at the viewpoint ($VP_m$) and that form a prede-termined angle ($\theta_{mn}$) with respect to a tangential line ($TL_m$) of the curved line (CL) at the starting point; and
generating a developed view (DV) in which each of the projection pixels ($PP_{mn}$) is arranged on a projection plane in such a manner that the arrangement order of the viewpoints ($VP_m$) and the arrangement order of the plurality of

view-line vectors ($R_{mn}$) at each of the viewpoints ($VP_m$) are maintained, wherein the predetermined angle ($\theta_{mn}$) with respect to at least a part of the view-line vectors ($R_{mn}$) is set at an acute angle or an obtuse angle.

A developed-view generation apparatus according to the present invention is a developed-view generation apparatus comprising:

a developed-view generation means that determines, at each of a plurality of viewpoints on an arbitrary curved line in a three-dimensional image, the pixel values of projection pixels onto which a structure on a plurality of view-line vectors, the structure being represented by the three-dimensional image, is projected by using information about images on the view-line vectors and/or images in the vicinities of the view-line vectors for the plurality of view-line vectors that have a starting point at the viewpoint and that form a predetermined angle with respect to a tangential line of the curved line at the starting point, and that generates the developed view in which each of the projection pixels is arranged on a projection plane in such a manner that the arrangement order of the viewpoints and the arrangement order of the plurality of view-line vectors at each of the viewpoints are maintained, wherein the predetermined angle with respect to at least a part of the view-line vectors is set at an acute angle or an obtuse angle.

A computer-readable recording medium stored therein a developed-view generation program of the present invention is a recording medium in which a program for causing a computer to execute the aforementioned method is stored.

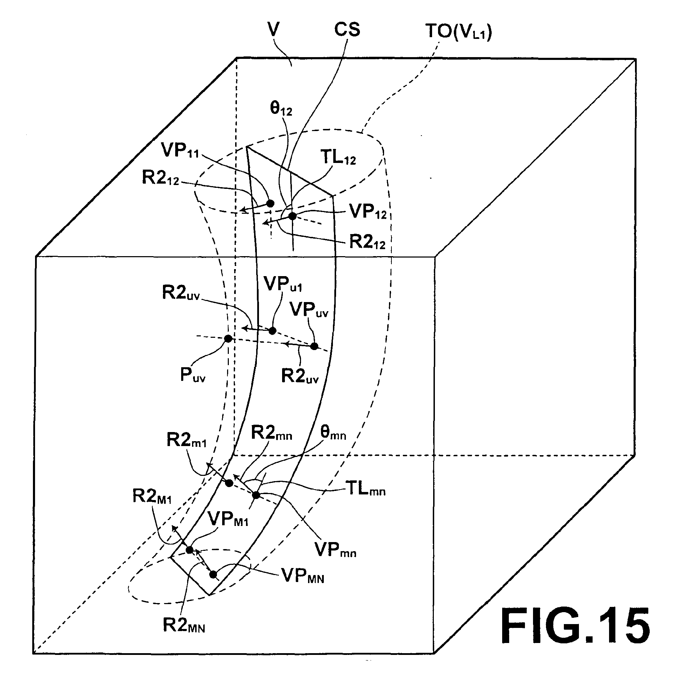

As an example is schematically illustrated in Figures 15 and 2, a slice-view generation method of the present invention is a slice-view generation method comprising the steps of:

determining the pixel values of projection pixels ($PP_{mn}$) onto which a structure on a plurality of view-line vectors ($R2_{mn}$) is projected by using information about images on the view-line vectors ($R2_{mn}$) and/or images in the vicinities of the view-line vectors ($R2_{mn}$) for the plurality of view-line vectors ($R2_{mn}$) that have a starting point at each of viewpoints ($VP_{mn}$; m = 1, 2, ..., n = 1, 2, ...) on an arbitrary curved surface (CS) in a three-dimensional image (V), that form a predetermined angle ($\theta_{mn}$) with respect to a tangential line ($TL_{mn}$) of the curved surface (CS) at the starting point and that are directed toward a peripheral direction on one side of the curved surface (CS); and generating the slice view (SV) in which each of the projection pixels ($PP_{mn}$) is arranged on a projection plane in such a manner that the arrangement order of the viewpoints ($VP_{mn}$) is maintained, wherein the predetermined angle ($\theta_{mn}$) with respect to at least a part of the view-line vectors ($R2_{mn}$) is set at an acute angle or an obtuse angle.

A slice-view generation apparatus of the present invention is a slice-view generation apparatus comprising:

a slice-view generation means that determines the pixel values of projection pixels onto which a structure on a plurality of view-line vectors is projected by using information about images on the view-line vectors and/or images in the vicinities of the view-line vectors for the plurality of view-line vectors that have a starting point at each of viewpoints on an arbitrary curved surface in the three-dimensional image, that form a predetermined angle with respect to a tangential line of the curved surface at the starting point and that are directed toward a peripheral direction on one side of the curved surface, and generates the slice view in which each of the projection pixels is arranged on a projection plane in such a manner that the arrangement order of the viewpoints is maintained, wherein the predetermined angle with respect to at least a part of the view-line vectors is set at an acute angle or an obtuse angle.

A computer-readable recording medium stored therein a slice-view generation program of the present invention is a recording medium in which a program for causing a computer to execute the aforementioned method is stored.

Hereinafter, the present invention will be described in detail.

One of examples of the "structure being represented by a three-dimensional image" is a tubular hollow structure (tubular structure) of a living body (organism), such as a large intestine. In that case, the curved line may be a core line passing through the central part of the tubular hollow structure.

Further, the "three-dimensional image" may be obtained by performing a certain kind of coordinate conversion on a three-dimensional image in a different coordinate system. For example, the "three-dimensional image" may be obtained by performing coordinate conversion for converting a curved line structure in a three-dimensional image in a coordinate system into a straight line.

Here, a straight line is regarded as one of examples of the "curved line".

The "plurality of view-line vectors that have a starting point at the viewpoint and that form a predetermined angle with respect to a tangential line of the curved line at the starting point" are radially present with respect to each of the viewpoints, as illustrated in Figure 1 for the case of viewpoint $VP_m$. The range of the directions of radiation may be an arbitrary angle, such as 120 degrees, 180 degrees and 360 degrees.

Examples of the "information about images" are the intensity of signals (CT value or the like), density values, brightness values, color signal values (R, G, B or the like), which were obtained during imaging or obtainment of the three-dimensional image, the degree of opacity, which is used in volume rendering, and the like.

One of examples of the method for "determining the pixel values of projection pixels" is processing for obtaining the pixel value of a projection pixel by setting a plurality of search points (searching points or probe points) along a view-line and by obtaining the pixel value based on information about the plurality of set search points and/or the vicinities thereof. Such processing is, for example, processing for obtaining an average value of the pixel values of search points, MIP (Maximum Intensity Projection: Maximum Value Projection) processing for performing projection by extracting the maximum value of the pixel values of the search points, MinIP (Minimum Intensity Projection: Minimum Value Projection) processing for performing projection by extracting the minimum value of the pixel values of the search points, volume rendering by using a ray casting method, in which the pixel value of the projection pixel is obtained by accumulating the degree of opacity (opacity) and the brightness value at each of the search points along the view-line, or the like.

One of examples of processing to "generate the developed view / slice view in which each of the projection pixels is arranged on a projection plane in such a manner that the arrangement order of the viewpoints and the arrangement order of the plurality of view-line vectors at each of the viewpoints are maintained" is a method, such as the method disclosed in Japanese Unexamined Patent Publication No. 8(1996)-249492, in which a projection pixel for each of view-line vectors at each of viewpoints is arranged (projected) in a coordinate system of a short cylindrical projection surface, the axis of which is the tangential line at each of the viewpoints, and the cylindrical projection surfaces are connected to each other in the order of arrangement of the viewpoints, and the connected cylindrical projection surface is further developed onto a projection plane by performing coordinate conversion. Other examples are a method, in which a projection pixel for each of view-line vectors at each viewpoint is projected onto a projection plane as a single line by performing coordinate conversion and the line at each of the viewpoints is arranged on the projection plane in the order of arrangement of the viewpoints and the like.

It is desirable that "(the predetermined angle with respect to) at least a part of the view-line vectors (is set at an acute angle or an obtuse angle)" is view-line vectors corresponding to projection pixels in a continuous area within a developed view / slice view.

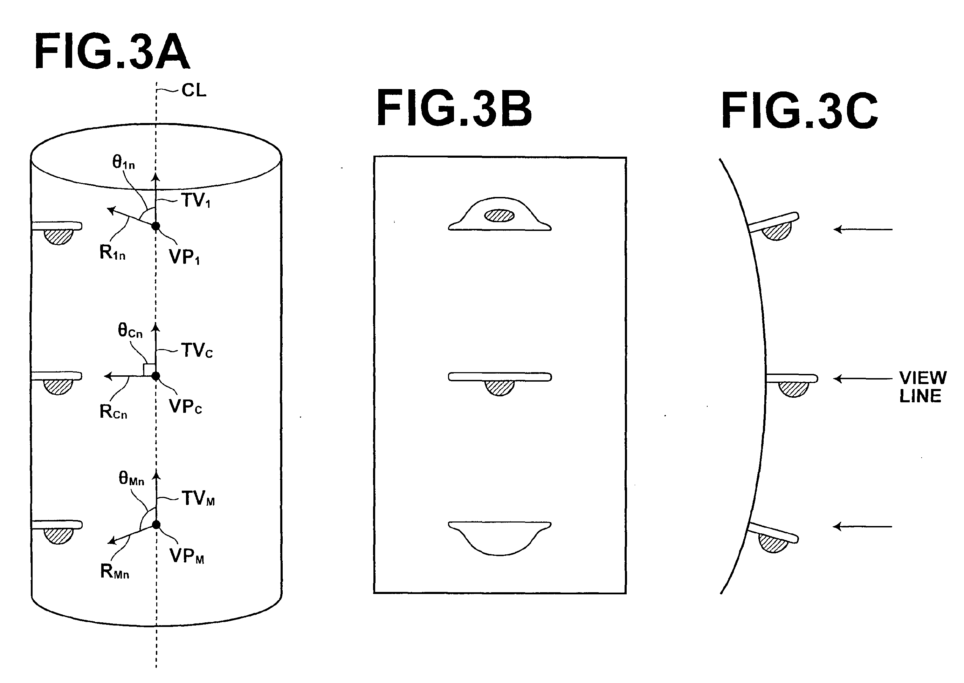

Another example of the method for determining the predetermined angle ($\theta_{mn}$) is as follows. As illustrated in Figure 1 and Figure 3A, which is a simplified diagram using a straight line instead of a curved line (CL), the predetermined angle ($\theta_{mn}$) may be determined in such a manner that an angle ($\theta_{Mn}$) formed between a tangent vector ($TV_M$) in the direction of a tangential line ($TL_M$) of the curved line (CL) at the viewpoint ($VP_M$) corresponding to the projection pixel (for example, $PP_{Mn}$) on one-end side in the direction of the curved line (CL) in a developed view (DV), the tangent vector ($TV_M$) having a direction along the curved line (CL) from the viewpoint ($VP_M$) corresponding to the projection pixel ($PP_{Mn}$) on the one-end side toward the viewpoint ($VP_1$) corresponding to the projection pixel (for example, $PP_{In}$) on the-other-end side in the direction of the curved line (CL) in the developed view (DV), and a view-line vector ($R_{Mn}$) at the viewpoint ($VP_M$) corresponding to the projection pixel ($PP_{Mn}$) on the one-end side is an obtuse angle, and that an angle ($\theta_{In}$) formed between the tangent vector ($TV_I$) and the view-line vector ($R_{In}$) at the viewpoint ($VP_I$) corresponding to the projection pixel ($PP_{In}$) on the-other-end side is an acute angle, and that an angle ($\theta_{Cn}$) formed between the tangent vector ($TV_C$) and the view-line vector ($R_{Cn}$) at the viewpoint ($VP_C$) corresponding to the projection pixel (for example, $PP_{Cn}$) at a central part in the direction of the curved line (CL) in the developed view (DV) is substantially a right angle. Here, the phrase "the direction of the curved line (CL) in the developed view (DV) " refers to the arrangement direction of projection pixels ($PP_{mn}$) that correspond to different viewpoints ($VP_m$) in the developed view (DV). In the developed view (DV) illustrated in Figure 2, the direction is a vertical direction. Further, the aforementioned angle ($\theta_{mn}$) at each of the viewpoints may be determined by using a function or a lookup table. Further, in Figure 3A, viewpoints $VP_I$, $VP_C$ and $VP_M$ are illustrated only as examples. At all of viewpoints $VP_I$ through $VP_M$, the aforementioned angles ($\theta_{mn}$) are determined in such a manner that angles are acute angles at viewpoints in the vicinity of the viewpoint $VP_I$, that angles are substantially right angles at viewpoints in the vicinity of the viewpoint $VP_C$ and that angles are obtuse angles at viewpoints in the vicinity of the viewpoint $VP_M$. Further, in generation of slice views according to the present invention, predetermined angles ($\theta_{mn}$) may be determined in a similar manner by replacing the curved line (CL) in the above description with a curved surface (CS).

Further, a change in the predetermined angle ($\theta_{mn}$) with respect to at least a part of the view-line vectors may be received and a developed view / slice view may be generated based on the predetermined angle ($\theta_{mn}$) that has been changed.

In the present invention, setting of the plurality of viewpoints may be received and a developed view / slice view may be generated based on the plurality of viewpoints that have been received. The setting of the viewpoints may be received, for example, by using a user interface for displaying an image showing the curved line and for inputting setting in the image. Alternatively, the setting may be received by using a user interface for assigning a movement direction and a movement amount with respect to a developed view / slice view.

Further, in the developed view / slice view, an interval (distance) between projection pixels in a direction (horizontal direction in the developed view / slice view (DV/SV) illustrated in Figure 2) vertical to the direction of the curved line in the developed view / slice view may become smaller as the projection pixels are positioned closer to either end of the developed view / slice view in the direction (vertical direction in the developed view / slice view (DV/SV) illustrated in Figure 2) of the curved line in the developed view / slice view. Alternatively, if the developed view / slice view is an image of a tubular hollow structure, the interval of projection pixels may be determined based on the size of the diameter of the tube (a tubular hollow or a lumen) of the structure.

According to the developed-view generation method and apparatus and a recording medium stored therein a developed-view generation program of the present invention, when a developed view (DV) is generated from a plurality of viewpoints ($VP_m$; m = 1, 2, ...) on an arbitrary curved line (CL) in a three-dimensional image (V), at each of the viewpoints ($VP_m$), an angle ($\theta_{mn}$) between the tangential line ($TL_m$) at each of the viewpoints ($VP_m$) on the curved line (CL) and the view-line vector ($R_{mn}$; n = 1, 2, ...) starting at the viewpoint ($VP_m$) is determined in such a manner that the angle ($\theta_{mn}$) with respect to at least a part of the view-line vectors is set at an acute angle or an obtuse angle. Therefore, it is possible to obtain a developed view (DV) in which a structure in the vicinity of the curved line (CL) is observed from an oblique direction (diagonal direction), thereby facilitating observation of the structure in the depth direction thereof

For example, if the angle ($\theta_{Mn}$) between the tangent vector ($TV_M$) of the curved line (CL) and the view-line vector ($R_{Mn}$) is set at an obtuse angle at a viewpoint ($VP_M$) corresponding a projection pixel (for example, $PP_{Mn}$) in the developed view (DV), the projection pixel corresponding to one-end-side of the curved line (CL), and if the angle is set at an acute angle at a viewpoint ($VP_I$) corresponding a projection pixel ($PP_{In}$) on the other-end-side, and if the angle is set substantially at a right angle at a viewpoint ($VP_C$) corresponding a projection pixel (for example, $PP_{Cn}$) at the central part, the structure in the vicinity of the curved line (CL) can be observed from various directions. As the developed view DV that is schematically illustrated in Figure 3B shows, the structure in the vicinity of the curved line (CL) can be observed from various directions, such as the obliquely upper direction (right), the front direction and the obliquely lower direction (left), according to positions with respect to the direction of the curved line (CL) in the developed view (DV). Therefore, observation of the structure in the depth direction becomes even easier. As schematically illustrated in Figure 3C, the developed view illustrated in Figure 3B may be regarded as an image in which the both ends of the structure, itself, which is an observation target, have been bent or warped toward the outside.

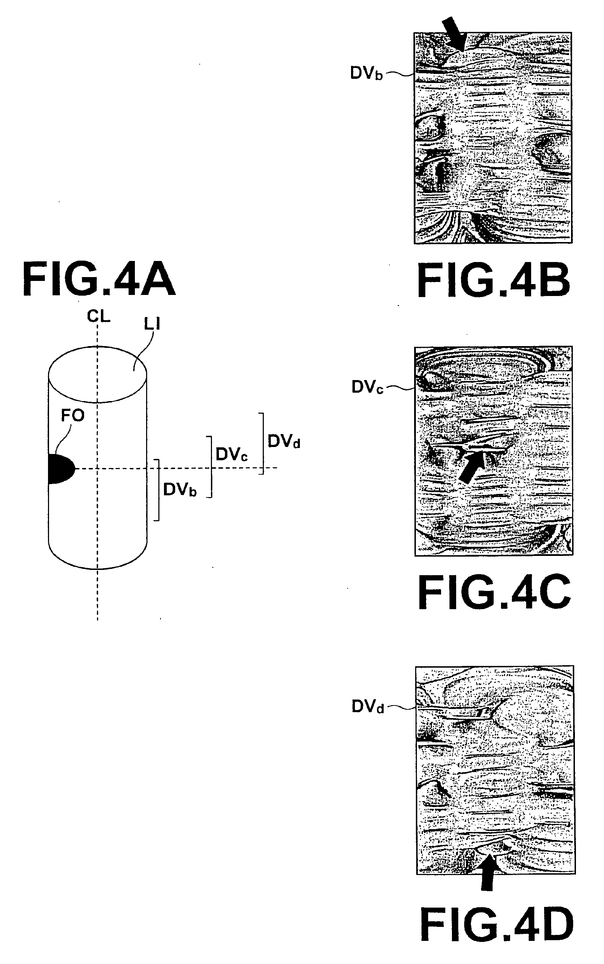

Further, if setting of the plurality of viewpoints is received and a developed view is generated based on the plurality of viewpoints that have been received, it is possible to move a display area of the developed view. Therefore, a structure of interest may be observed from various directions and observation of the structure in the depth direction becomes even easier. Figure 4A is a schematic diagram illustrating large intestine LI (curved line (CL)) using a straight line. If fold F0 in Figure 4A is a structure of interest, developed views as illustrated in Figures 4B, 4C and 4D are sequentially obtained by moving the range of viewpoints for displaying a developed view from range $DV_b$ to range $DV_c$ and to range $DV_d$. In each of Figures 4B through 4D, the fold F0 (a portion indicated with an arrow in each of the diagrams) can be observed from the obliquely lower direction, the front direction and the obliquely upper direction, respectively.

Meanwhile, if a change in the predetermined angle ($\theta_{mn}$) with respect to at least a part of view-line vectors is received and a developed view is generated based on the predetermined angle ($\theta_{mn}$) that has been changed, it is not necessary to move the range of displaying a developed view as described above. In an area of the developed view, the area corresponding to the view-line vector or vectors, the predetermined angle or angles ($\theta_{mn}$) with respect to which have been changed, it is possible to observe the observation target from a different direction without moving the range. Therefore, the operability and the observation efficiency can be improved.

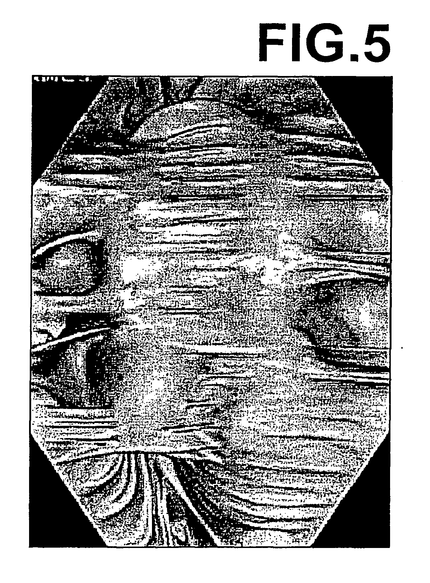

Further, as illustrated in the developed view in Figure 5, if an interval between projection pixels in a direction vertical to the direction of the curved line in the developed view is set in such a manner that the interval becomes smaller as the projection pixels are located closer to either end of the developed view in the direction of the curved line, a structure in the developed view is displayed in a smaller size as a distance from the central part of the developed view becomes longer. Therefore, the developed view can be perspectively displayed.

Further, in the slice-view generation method, apparatus and program of the present invention, the method for setting an angle ($\theta_{mn}$) between a tangential line ($TL_{mn}$) at each of viewpoints ($VP_{mn}$) and a view-line vector ($R_{mn}$) at the viewpoint ($VP_{mn}$) is the same as the aforementioned method. Therefore, an advantageous effect similar to the effect achieved in the aforementioned developed-view generation method, apparatus and program can be achieved.

BRIEF DESCRIPTION OF THE DRAWINGS

   Figure 1 is a schematic diagram illustrating a method for setting a view-line vector in developed-view generation processing of the present invention;
   Figure 2 is a schematic diagram illustrating a positional relationship between a developed view / slice view and a projection pixel;

Figure 3A is a schematic diagram illustrating a characteristic feature of a developed view that is generated in the present invention (an example of an angle between a view-line vector and a tangent vector);

Figure 3B is a schematic diagram illustrating a characteristic feature of a developed view that is generated in the present invention (an example of a developed view that is generated);

Figure 3C is a schematic diagram illustrating a characteristic feature of a developed view that is generated in the present invention (a schematic diagram for explaining the content of the developed view that is generated);

Figure 4A is a schematic diagram illustrating an effect achieved by moving the display range of a developed view in the present invention (a schematic diagram illustrating a display range of each developed view);

Figure 4B is a schematic diagram illustrating an effect achieved by moving the display range of a developed view in the present invention (a developed view viewed from an obliquely lower direction of a fold);

Figure 4C is a schematic diagram illustrating an effect achieved by moving the display range of a developed view in the present invention (a developed view viewed from the front side of the fold) ;

Figure 4D is a schematic diagram illustrating an effect achieved by moving the display range of a developed view in the present invention (a developed view viewed from an obliquely upper direction of a fold);

Figure 5 is a diagram illustrating another example of a developed view generated in the present invention;

Figure 6 is a schematic diagram illustrating the configuration of a three-dimensional medical image processing system in which a developed-view / slice-view generation apparatus according to an embodiment of the present invention has been mounted;

Figure 7 is a schematic block diagram illustrating the configuration for realizing a large-intestine analysis function in a first embodiment of the present invention;

Figure 8A is a diagram for explaining processing for extracting a large intestine (connection of air portions in an axial slice view);

Figure 8B is a diagram for explaining processing for extracting a large intestine (an example of a volume rendering image of an extracted large-intestine region);

Figure 9 is a schematic diagram illustrating the flow of developed-view generation processing in an embodiment of the present invention;

Figure 10 is a diagram illustrating an example of a method for setting an angle between a view-line vector and a tangent vector in the present invention;

Figure 11A is a diagram for explaining an angle of radiation of view-line vectors (central angle = 120 degrees);

Figure 11B is a diagram for explaining an angle of radiation of view-line vectors (central angle = 180 degrees);

Figure 11C is a diagram for explaining an angle of radiation of view-line vectors (central angle = 360 degrees);

Figure 12A is a schematic diagram illustrating a positional correlation between the direction of a view-line vector and a projection pixel in a developed view (the direction of a view-line vector in a coordinate space with the origin of the space at a viewpoint);

Figure 12B is a schematic diagram illustrating a positional correlation between the direction of a view-line vector and a projection pixel in a developed view (the position of a projection pixel by a view-line vector in a coordinate plane of the developed view);

Figure 13 is a flow chart showing an example of workflow in analysis of a large intestine in the embodiment of the present invention;

Figure 14A is a schematic diagram illustrating a fold and a polyp in a large intestine;

Figure 14B is a diagram illustrating a developed view showing a fold and a polyp according a conventional technique;

Figure 15 is a schematic diagram showing a method for setting a view-line vector in slice-view generation processing of the present invention;

Figure 16 is a schematic block diagram illustrating the configuration for realizing a large-intestine analysis function in a second embodiment of the present invention;

Figure 17 is a schematic diagram illustrating the flow of slice-view generation processing according to an embodiment of the present invention; and

Figure 18 is a schematic diagram illustrating a method for setting a view-line vector in slice-view generation processing in the second embodiment of the present invention.

## DESCRIPTION OF THE PREFERRED EMBODIMENTS

Hereinafter, a three-dimensional medical image processing system in which a developed-view generation apparatus according to a first embodiment of the present invention has been mounted will be described with reference to drawings.

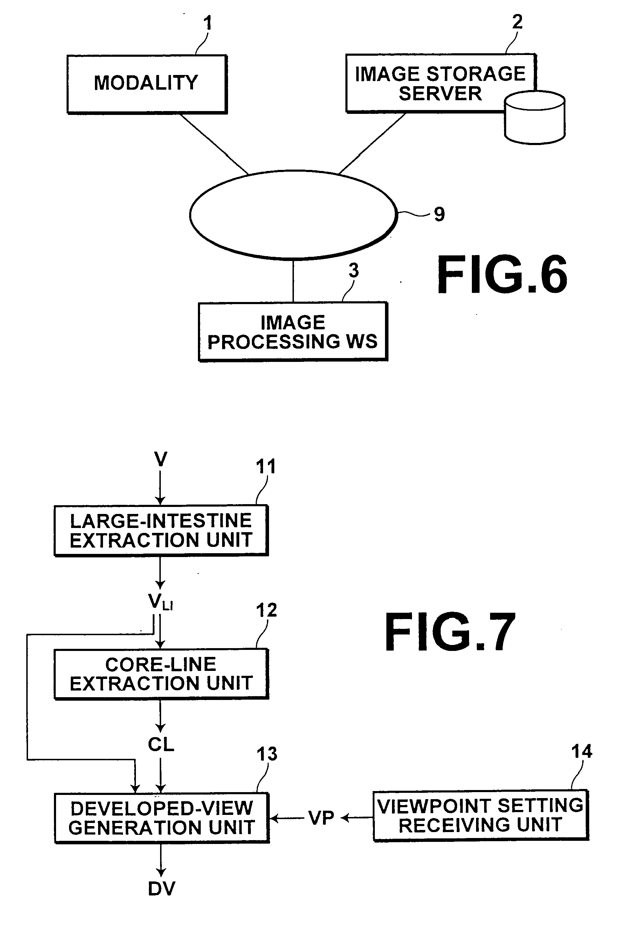

Figure 6 is a schematic diagram illustrating the hardware configuration of a three-dimensional medical image processing system. As illustrated in Figure 6, a modality 1, an image storage server 2 and an image processing workstation 3 are connected to each other in such a manner that they can communicate with each other through a network 9.

The modality 1 obtains a three-dimensional medical image (voxel data) V that represents a subject to be examined (an object or target of examination or analysis). Specifically, the modality 1 is a CT apparatus, an MRI apparatus, an ultrasonic diagnostic apparatus or the like.

The image storage server 2 is a computer that stores the three-dimensional medical image V that has been obtained by the modality 1 and medical images that have been generated by performing image processing at the image processing workstation 3 in an image database and manages the stored images. The image storage server 2 includes a high-capacity external storage apparatus and software for managing the database (for example, ORDB (object relational database) management software).

The image processing workstation 3 is a computer that performs image processing on the three-dimensional medical image V obtained from the modality 1 or the image storage server 2. The image processing workstation 3 performs image processing based on a request from a user who reads the image (a physician or radiologist who is specialized in diagnosis using images) and displays a generated image. Particularly, the image processing workstation 3 includes an input device, such as a keyboard and a mouse, for receiving (inputting) a request from the user who reads the image, a main storage apparatus that has a sufficient capacity for storing the obtained three-dimensional medical image V and a display for displaying the generated image. Developed-view generation processing of the present invention is realized by executing a program that has been installed in the image processing workstation from a recording medium, such as a CD-ROM. Alternatively, the program may be downloaded from a server that is connected through a network, such as the Internet, and installed in the image processing workstation.

The storage format of image data and communication between the apparatuses via the network 9 are based on a protocol, such as DICOM (Digital Imaging and Communication in Medicine).

Figure 7 is a block diagram illustrating a part of the image processing workstation 3, the part relating to a large-intestine analysis function for generating a developed view of the large intestine. As illustrated in Figure 7, the part relating the large-intestine analysis function includes a large intestine extraction unit 11, a core line extraction unit 12, a developed-view generation unit 13 and a viewpoint setting receiving unit 14. The large intestine extraction unit 11 extracts image $V_{LI}$, which represents a large intestine region, from the input three-dimensional image V. The core line extraction unit 12 extracts a core line CL that passes through the central part of the lumen (tube) in the image $V_{LI}$ of the large intestine. The developed-view generation unit 13 generates a developed view DV based on the image $V_{LI}$ representing the region of the large intestine, the initial viewpoint position or viewpoint information VP that is received by the viewpoint setting receiving unit 14 and the core line CL. Each of the processing units will be described in detail.

In the present embodiment, the three-dimensional image V is an image obtained by imaging the abdomen of a human body by using a CT.

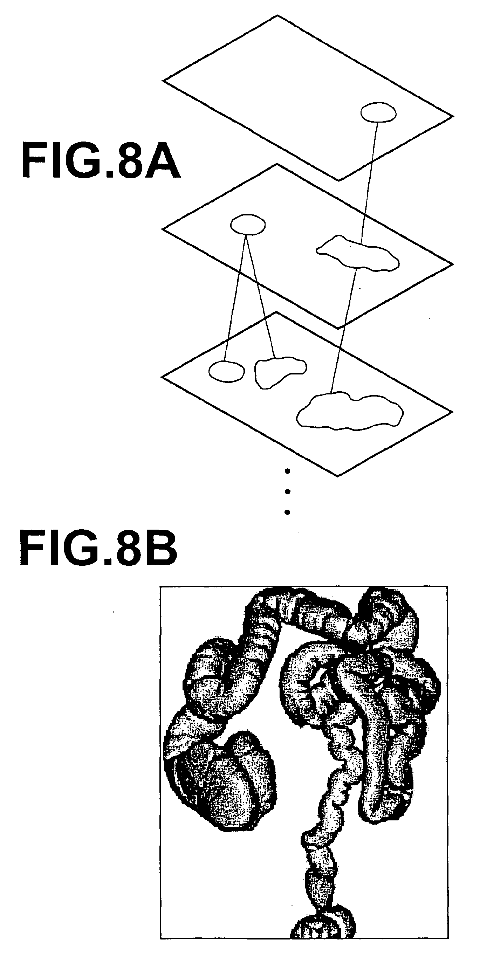

First, the large intestine extraction unit 11 performs processing on each of axial slice views (images) that are obtained from the three-dimensional image V. Each of the axial slice views includes a human abdomen and is a slice view at a cross section (axial section; axial) perpendicular to the body axis of a subject. The large intestine extraction unit 11 performs processing for dividing each of the axial slice views into an external area (outside of the human body) and an internal area (inside of the human body) based on the surface of the human body by using a conventional method. An example of the method is as follows. Binary processing is performed on an input axial slice view and an edge (outline or contour) is extracted by performing edge extraction processing. Further, the inside of the extracted edge is extracted as the internal area (human body area). Then, binary processing is performed on the internal area by using a threshold value and extracts a large-intestine region candidate in each of the axial slice views. Specifically, since air is present in the lumen of the large intestine, the threshold value is set so as to extract an air portion and binary processing is performed. Accordingly, an air portion within the human body in each of the axial slice views is extracted. Finally, as schematically illustrated in Figure 8A, only a part in which air portions are connected to each other between the axial slice views is extracted as image $V_{LI}$, which shows a large intestine region. Figure 8B is a diagram illustrating an example of an image generated by performing volume rendering on the extracted large intestine region.

The core line extraction unit 12 extracts a core line CL that passes through the central part of the lumen of the large intestine from the extracted large intestine region $V_{LI}$ by using a conventional method. One of examples of the method is a method for performing three-dimensional thinning processing on the binary image that is obtained in the final processing by the large intestine extraction unit 11 and the like. The binary image is an image obtained by extracting only the part in which the air portions are connected to each other. In other words, the binary image shows the large intestine region (please refer to Japanese Unexamined Patent Publication No 2004-243373).

Further, a user interface for manually correcting the result of processing by the large intestine extraction unit 11 and the core line extraction unit 12 may be provided. One of examples of the user interface is an interface that displays each of axial slice views obtained from the three-dimensional image V by superposing the extracted large intestine region $V_{LI}$ and the core line CL thereon, enhancing the large intestine region $V_{LI}$ and the core line CL. Then, the user operates a mouse or the like at the image processing workstation 3 and corrects the region or the core line (a point in the image), the extraction results of which are wrong, for each of the axial slice views.

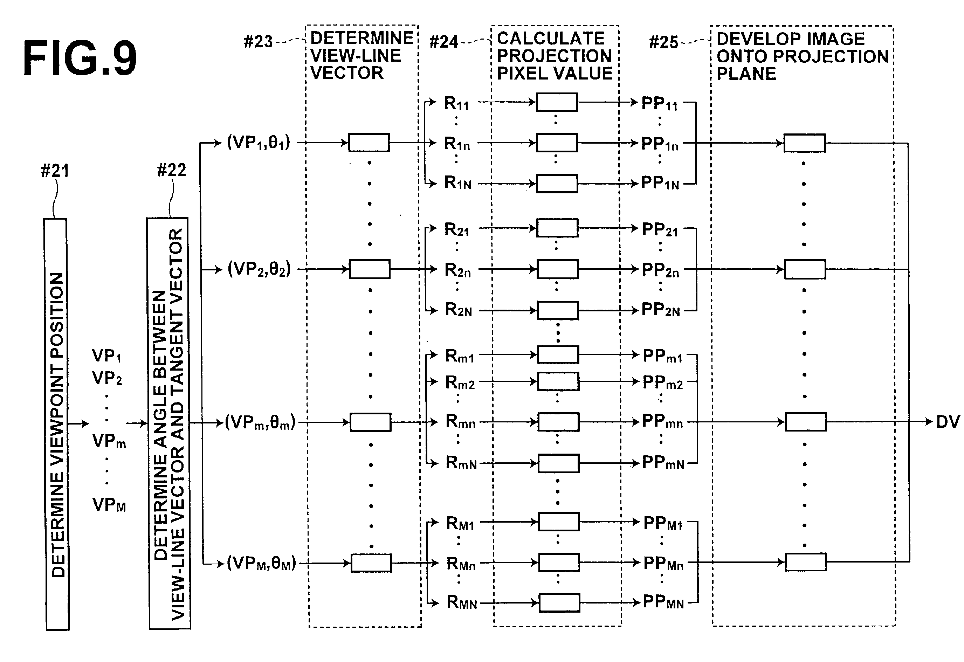

Figure 9 is a schematic diagram illustrating processing performed by the developed-view generation unit 13 in detail.

First, viewpoint information VP that can specify the positions of a plurality of viewpoints $VP_m$ (m = 1, 2, ..., M) and a curved line on which the viewpoints $VP_m$ should be set, in other words, information about the core line CL of the large intestine are received and the positions of the plurality of viewpoints $VP_m$ for generating a developed view DV are determined (step #21). Here, the input viewpoint information VP is, for example, information about the initial position (for example, the last end point of the core line of the extracted large intestine) of the developed view DV that is generated first. The developed-view generation unit 13 sets a predetermined number M of viewpoints $VP_1$, $VP_2$, ..., $VP_M$ at predetermined intervals along the input core line CL from the initial position. The intervals of the viewpoints may be provided, for example, as a program startup parameter of the developed-view generation unit 13. Alternatively, information representing a movement amount in the direction of the curved line (core line CL) with respect to the developed view DV that is currently displayed may be used as the viewpoint information VP. In this case, the position to which each of the viewpoints $VP_m$ corresponding to the currently displayed developed view DV is moved by the input movement amount along the core line CL is the position of the viewpoint $VP_m$ of a developed view DV that should be generated next.

Next, an angle $\theta_{mn}$ between a view-line vector $R_{mn}$ (n = 1, 2, ..., N) starting at each of the viewpoints $VP_m$ and a tangent vector $TV_m$ of the curved line (core line) CL at each of the viewpoints $VP_m$ is determined (step #22) . In the present embodiment, a common angle (same angle) $\theta_m$ is used for each of the viewpoints $VP_m$. Specifically, with respect to m = 1, 2, ..., M, the angles are $\theta_{m1} = \theta_{m2} = ... = \theta_{mN} = \theta_m$. Here, the tangent vector $TV_m$ is a vector in the direction of the tangential line of the curved line (core line) CL at each of the viewpoints $VP_m$, as illustrated in Figure 1. The direction of the tangent vector $TV_m$ is a direction along the curved line (core line) CL from the last viewpoint $VP_M$ of the plurality of viewpoints $VP_m$ to the first viewpoint $VP_1$ of the plurality of viewpoints $VP_m$.

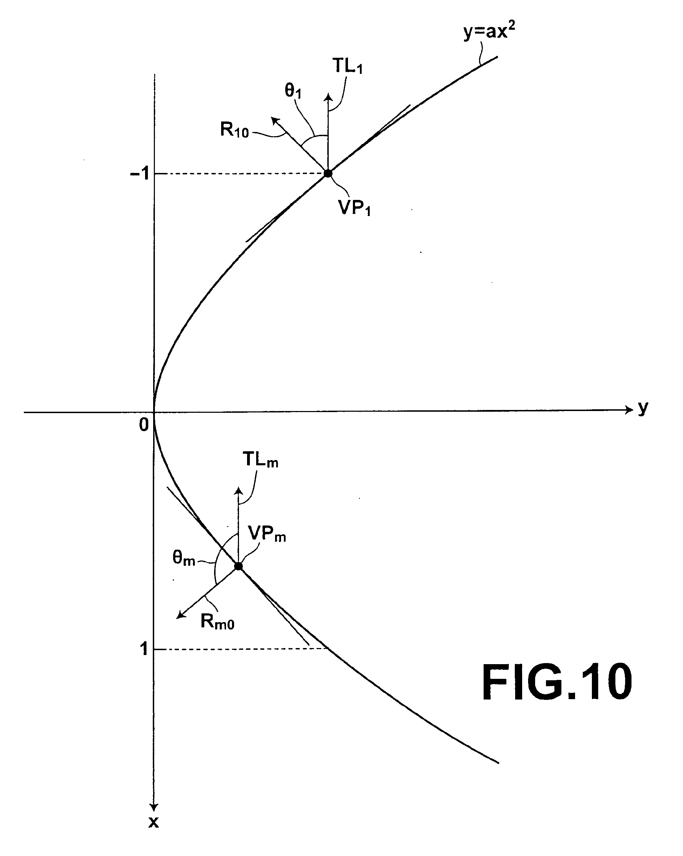

Figure 10 is a diagram illustrating an example of a method for determining an angle $\theta_{mn}$ at each of the viewpoints $VP_m$. Here, x axis in Figure 10 corresponds to the curved line (core line) CL and the position of x=-1 corresponds to the position of the first viewpoint $VP_1$ and the position of x=1 corresponds to the position of the last viewpoint $VP_M$. Then, other viewpoints $VP_2$, ..., $VP_{M-1}$ are arranged between the two positions. For each value of x, a vector perpendicular to a tangential line at a point on $y=ax^2$ (value a is a predetermined constant) is used as a view-line vector $R_{mn}$ and a vector in the x-axis direction at the point, the vector having a negative direction, is used as a tangent vector $TV_m$. Then, the angle $\theta_{mn}$ between the view-line vector $R_{mn}$ and the tangent vector $TV_m$ is determined. Accordingly, the angle $(\theta_m)$ between the view-line vector $(R_{mn})$ and the tangent vector $TV_m$ at a viewpoint $VP_m$ that is positioned behind the middle point of the plurality of viewpoints becomes an obtuse angle. Further, the angle $(\theta_m)$ between the view-line vector $(R_{mn})$ and the tangent vector $TV_m$ at a viewpoint $VP_m$ that is positioned before the middle point of the plurality of viewpoints becomes an acute angle. Further, the angle $(\theta_m)$ between the view-line vector $(R_{mn})$ and the tangent vector $TV_m$ at a viewpoint $VP_m$ that is positioned in the vicinity of the middle point of the plurality of viewpoints substantially becomes a right angle. The method for determining the angle $\theta_{mn}$ is not limited to this method. For example, the angle $\theta_{mn}$ may be determined by using a lookup table in which the angle $\theta_{mn}$ is defined for each of the viewpoints $VP_m$. Further, in the present embodiment, the common angle $\theta_{mn}$ is used for each of the viewpoints $VP_m$. Alternatively, the angle $\theta_{mn}$ may be determined for each of the view-line vectors $R_{mn}$.

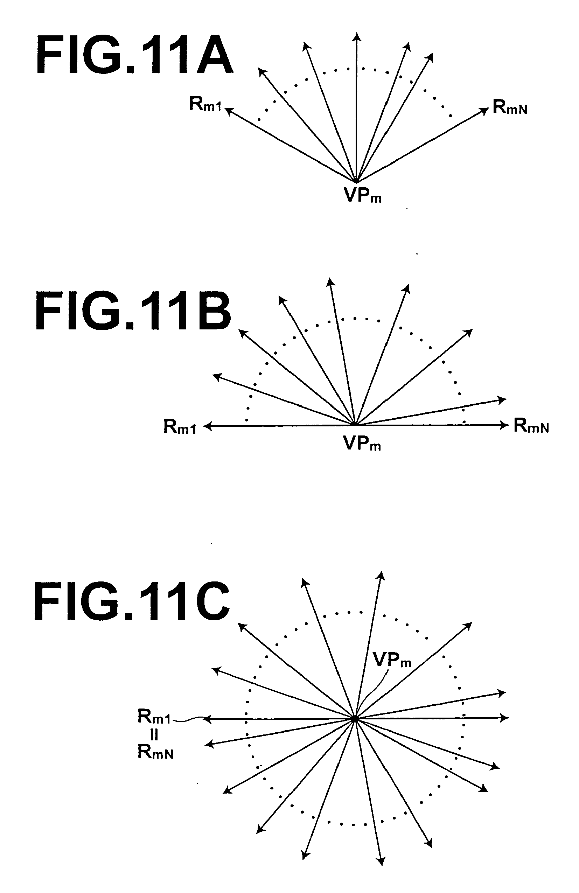

After the angle $\theta_{mn}$ for each of the view-line vectors is determined, as described above, the developed-view generation unit 13 determines N number of view-line vectors $R_{mn}$ at each of the viewpoints $VP_m$ (step #23). This processing may be performed in parallel for each of the viewpoints $VP_m$. Figures 11A through 11C are diagrams illustrating the view-line vectors $R_{mn}$ that are set by the developed-view generation unit 13, the view-line vectors $R_{mn}$ being viewed from the direction of the tangential line at the viewpoint $VP_m$. As illustrated in Figures 11A through 11C, the view-line vectors $R_{mn}$ are radially set from the viewpoint $VP_m$. At this time, the central angle may be a value that has been provided in advance by a startup parameter or the like or a value input by the user. Figure 11A is a diagram illustrating an example in which the central angle is 120 degrees. Figure 11B is a diagram illustrating an example in which the central angle is 180 degrees. Figure 11C is a diagram illustrating an example in which the central angle is 360 degrees. When the central angle is 360 degrees, the view-line vectors $R_{m1}$ and $R_{mN}$ may coincide with each other, as illustrated in Figure 11C.

Next, the developed-view generation unit 13 determines, for each view-line vector $R_{mn}$, the pixel value of a projection pixel $PP_{mn}$ onto which a structure on the view-line vector, the structure being represented by the three-dimensional image V, is projected, by using information about the image on the view-line vector $R_{mn}$ and/or information about the image in the vicinity of the view-line vector $R_{mn}$ (step #24). This processing may also be performed in parallel for each of the view-line vectors $R_{mn}$. In the present embodiment, as an example of the method for determining the pixel value of the projection pixel $PP_{mn}$, volume rendering by using a ray casting method is used. Specifically, the pixel value is obtained as follows.

The degree $\alpha$ of opacity and the color information c for each tissue of a subject to be examined are defined in advance based on CT values or the like. Then, based on the defined degree $\alpha$ of opacity and color information c, the degree $\alpha$ of opacity and the color information c at each voxel of the three-dimensional medical image V is stored as voxel data. First, a plurality of search points (searching points or probe points) $P_i$ (i = 1, 2, ..., I), which have been obtained by sampling the three-dimensional medical image V at predetermined intervals along the view-line vector $R_{mn}$, are set. Then, the brightness value $b(P_i)$ at each of the search points $P_i$ is calculated by using the following equation (1):

$$b(P_i) = h(N(P_i) \bullet L) \times c(P_i) \qquad (1)$$

Here, h is a shading coefficient by diffused reflection. Further, in the present embodiment, ambient light and specular reflection light are not taken into consideration. Further, $N(P_i)$ is a normal vector regulated by the gradient of a CT value at the search point $P_i$. L is a unit direction vector from the searching $P_i$ to a light source S that is provided in advance. The sign "·" represents the inner product of vectors and $c(P_i)$ is color information at the search point $P_i$. The color information is obtained by performing interpolation calculation using color information about voxels in the vicinity of the search point $P_i$, if necessary.

Further, the degree of opacity $\alpha(P_i)$ at each search point $P_i$ is obtained by performing interpolation calculation using the degrees of opacity of voxels in the vicinity of each search point $P_i$, if necessary.

Then, as the following equation (2) shows, the product of the brightness value $b(P_i)$ and the degree of opacity $\alpha(P_i)$ at each of the search points $P_i$ is continued to be added. Then, when the accumulated value of the degree of opacity $\alpha$ has reached a predetermined threshold value or when the view-line vector $R_{mn}$ has projected from the three-dimensional medical image V, which is the target of processing, processing on the view-line vector $R_{mn}$ is ended. Then, the addition result is determined as the pixel value C of the projection pixel $PP_{mn}$ in the view-line vector $R_{mn}$.

$$C \simeq \sum_{i=1}^{n} \left( b(P_i) \times \alpha(P_i) \prod_{k=1}^{i-1} (1 - \alpha(P_k)) \right) \qquad (2)$$

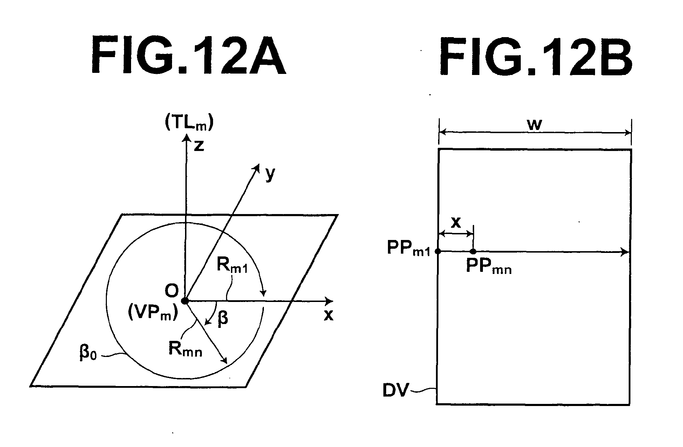

The pixel value of the projection pixel $PP_{mn}$ for each of view-line vectors $R_{mn}$ at each viewpoint $VP_m$ is calculated by performing the aforementioned processing. Then, the developed-view generation unit 13 generates a developed view DV by projecting the projection pixel $PP_{mn}$ in each of the view-line vectors $R_{mn}$ for each viewpoint $VP_m$ onto a projection plane (step #25). The projection pixels $PP_{mn}$ are projected as a single line in the arrangement order of the view-line vectors $R_{mn}$, specifically, in the order of n = 1, 2, ..., N for each viewpoint $VP_m$. Here, the arrangement order of each line on the projection plane is the arrangement order of the viewpoints $VP_m$, specifically, the order of m = 1, 2, ..., M. Figure 2 is a schematic diagram illustrating the projection position of each projection pixel $PP_{mn}$ on the projection plane (developed view DV). Figure 12 is a diagram illustrating the positional relationship between the direction of the view-line vector $R_{mn}$ in a coordinate space, the origin of which is the viewpoint $VP_m$, and the projection pixel $PP_{mn}$ by the view-line vector $R_{mn}$ in the coordinate plane of the developed view DV. Here, the angle between the tangent vector $TL_m$ and the view-line vector $R_{mn}$ is a right angle. As illustrated in Figure 12A, in a coordinate space that has the origin at the viewpoint $VP_m$, z axis in the direction of the tangent vector $TL_m$ and x axis in the direction of the view-line vector $R_{mn}$, the direction of the view-line vector $R_{m1}$ is used as a base direction. Further, an angle between the view-line vectors $R_{m1}$ and $R_{mn}$ is $\beta$ and a radiation angle (central angle) from the view-line vector $R_{m1}$ to the view-line vector $R_{mN}$ is $\beta_0$. Meanwhile, as illustrated in Figure 12B, the width of the developed view DV in the horizontal direction (the direction of the line that is vertical to the curved line (core line CL)) is w, the projection position of the projection pixel $PP_{m1}$ in the view-line vector $R_{m1}$ with respect to the horizontal direction is 0. Further, the projection position of the projection pixel $PP_{mn}$ in the view-line vector $R_{mn}$ is x with respect to the horizontal direction. Here, if the rotation matrix for rotating by $\beta$ degrees with respect to the z axis is $RotZ(\beta)$, the following equation is satisfied.

$$\bar{R}_{mn} = RotZ(\frac{x}{w}\beta_0)R_{m1} \qquad (3)$$

Therefore, it is possible to determine the position of each of projection pixels $PP_{mn}$ in the developed view DV with respect to the horizontal direction (line direction) based on the equation (3). Specifically, the position is determined so that the ratio of the angle $\beta$ between the view-line vector $R_{mn}$ at each of the viewpoints $VP_m$ and the base view-line vector (for example, $R_{m1}$) with respect to the radiation angle $\beta_0$ from the view-line vector $R_{m1}$ to the view-line vector $R_{mN}$ becomes the same as the ratio of the position of the projection pixel $PP_{mn}$ corresponding to the view-line vector $R_{mn}$ in

the developed view DV in the horizontal direction (line direction) with respect to the width of the developed view DV in the horizontal direction (line direction).

Meanwhile, the projection position with respect to the vertical direction of the developed view DV (the direction corresponding to the direction of the curved line (core line), in other words, the arrangement direction of the viewpoints $VP_m$) should be arranged so that the line at the viewpoint $VP_1$ becomes the highest portion of the developed view DV and the line at the viewpoint $VP_N$ becomes the lowest portion of the developed view DV. Lines at the viewpoints $VP_2$, $VP_3$, ..., $VP_{M-1}$ Between the two lines should be arranged based on the intervals of the viewpoints $VP_m$ in the coordinate system of the three-dimensional medical image V, for example.

The view-point setting receiving unit 14 provides a user interface for receiving an input of a movement amount in the direction of the curved line (core line CL) for a developed view DV that is currently displayed. Specifically, at the user interface, a developed view DV that is displayed at the display unit of the image processing workstation 3 is selected by an operation of clicking a mouse or the like with respected to the developed view DV. After the developed view DV is selected, the wheel portion of the mouse is rotated or the up/down key of the keyboard is pressed. The rotation amount of the wheel portion or the number of times of pressing (the length of time of pressing) is received as an input of the movement amount with respect to the developed view DV, for example. Further, a calculation formula should be prepared in advance to convert the rotation amount and the number of times of pressing (the length of time of pressing) into the movement amount. Alternatively, at the user interface, an image of the large intestine viewed from the outside of the body (please refer to Figure 8B) or an image in which a core line CL is superimposed on the image of the large intestine may be displayed and the position of a new viewpoint may be set with respect to the image.

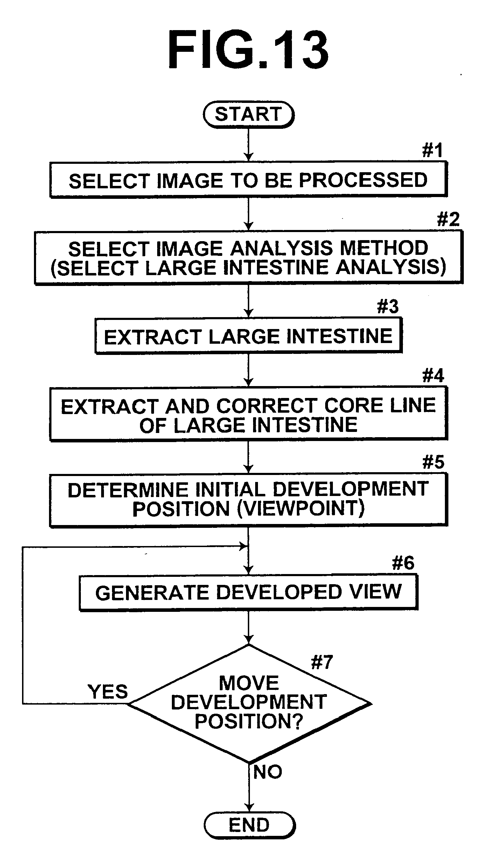

Next, a work flow using the large intestine analysis function including the developed-view generation processing of the present invention will be described with reference to the flowchart illustrated in Figure 13, the block diagram illustrated in Figure 7 and the like.

First, a user, such as a physician or radiologist specialized in diagnosis using images, performs an operation for selecting a desired three-dimensional image V from a list of diagnosis target images displayed at the image processing workstation 3 (step #1). Then, a slice view at an axial section of the selected three-dimensional image V is displayed at a display unit.

Next, the user selects "Large Intestine Analysis" from a menu screen displayed on the display unit of the image processing workstation 3 to diagnose a patient based on the three-dimensional image V (step #2). Then, the large intestine extraction unit 11 extracts image $V_{LI}$ representing the large intestine region from the input three-dimensional image V (step #3). Then, the core line extraction unit 12 extracts a core line CL passing through the central part of the lumen of the image $V_{LI}$ of the large intestine (step #4). Here, the user checks the extraction result at the screen and manually corrects the extraction result, if necessary.

After the core line is determined, the user selects "developed view generation" from the menu screen. Then, the developed-view generation unit 13 determines, based on the startup parameter of the program, the lower end of the core line CL (the last end of the large intestine) as the initial development position (viewpoint) of the developed view DV. Then, the developed-view generation unit 13 sets, based on the initial development position, M-number of viewpoints $VP_m$ (m = 1, 2, ···, M) on the core line CL. Further, the developed-view generation unit 13 determines an angle $\theta_m$ between the view-line vector $R_{mn}$ (n = 1, 2, ···, N) at each of the set viewpoints $VP_m$ and the tangent vector $TV_m$ at the viewpoint $VP_m$. Next, processing is performed in parallel for each of the viewpoints $VP_m$ and the directions of the view-line vectors $R_{mn}$ at each of the viewpoints $VP_m$ are determined. Further, processing is performed in parallel for each of the view-line vectors $R_{mn}$ and the pixel value of the projection pixel $PP_{mn}$, onto which the structure on the view-line vectors $R_{mn}$ has been projected, the structure being represented in the three-dimensional image V, is determined. The pixel value is determined by using information about the image on the view-line vector $R_{mn}$ and/or information about the image in the vicinity of the view-line vector $R_{mn}$. Then, for each of the viewpoints $VP_m$, the projection pixel $PP_{mn}$ in each of the view-line vectors $R_{mn}$ is projected, as a line, in the arrangement order of the view-line vectors $R_{mn}$, specifically, in the arrangement order of n = 1, 2, ···, N. The projection pixels $PP_{mn}$ are projected onto the projection plane in such a manner that the arrangement order of the viewpoints $VP_m$, in other words, the arrangement order of m = 1, 2, ···, M is maintained. Accordingly, the developed view DV is generated (step #6).

The generated developed view (DV) is displayed at the display unit of the image processing workstation 3. The user observes the developed view DV, as illustrated in Figure 4D. For example, if the user wishes to observe the region indicated with an arrow in Figure 4D from a different direction, the user clicks the developed view DV and rotates the wheel of the mouse forward. Then, the viewpoint setting receiving unit 14 obtains the rotation amount of the wheel and receives the rotation amount as an input of the movement amount in the direction of the curved line (core line CL) with respect to the developed view DV. Then, the viewpoint setting receiving unit 14 sends the movement amount, as viewpoint information VP, to the developed-view generation unit 13 (step #7; YES).

The developed-view generation unit 13 sets, based on the information VP about the movement amount of the viewpoint obtained by the view-point setting receiving unit 14, the viewpoint $VP_m$ of a developed-view DV that should be generated next. After then, a new developed-view DV (for example, images illustrated in Figures 4B and 4C) is generated by performing processing similar to the aforementioned processing (step #6). The image processing workstation 3 updates the display of the developed view DV by displaying the newly-generated developed view DV. Then, the user observes the updated developed view.

As described above, in the three-dimensional medical image processing system, in which the developed-view generation apparatus according to the first embodiment of the present invention has been mounted, when the developed-view generation unit 13 generates a developed view DM from a plurality of viewpoints $VP_m$ (m = 1, 2, ···, M) on the core line CL of the large intestine $V_{LI}$ in the three-dimensional image V, an angle $\theta_{mn}$ between the tangent vector $TV_m$ at each of the viewpoints $VP_m$ on the core line CL and the view-line vector $R_{mn}$ (m = 1, 2, ..., N) at the viewpoint $VP_m$, which start at the viewpoint $VP_m$, is determined at each of the viewpoints $VP_m$ in such a manner that the angle $\theta_{mn}$ with respect to at least a part of the view-line vectors $R_{mn}$ is set at an acute angle or an obtuse angle. Therefore, it is possible to obtain a developed view DV in which a structure (a fold of the large intestine or the like) in the vicinity of the curved line CL is observed from an oblique direction, thereby facilitating observation of the structure in the depth direction thereof.

Further, the developed view generation unit 13 sets the angle $\theta_{Mn}$ between the tangent vector $TV_M$ of the core line CL and the view-line vector $R_{Mn}$ at an obtuse angle at a viewpoint $VP_M$ corresponding a projection pixel $PP_{Mn}$ in the developed view (DV), the projection pixel $PP_{Mn}$ corresponding to one-end-side of the core line CL. Further, the developed view generation unit 13 sets the angle at an acute angle at a viewpoint $VP_1$ corresponding a projection pixel $PP_{1n}$ on the other-end-side. Further, the developed view generation unit 13 sets the angle substantially at a right angle at a viewpoint $VP_C$ corresponding to a projection pixel $PP_{Cn}$ at the central part. Therefore, as the developed view DV that is schematically illustrated in Figure 3B shows, the structure in the vicinity of the core line CL can be observed from various directions, such as the obliquely upper direction, the front direction and the obliquely lower direction, according to positions with respect to the direction of the core line CL in the developed view DV. Therefore, observation of the structure in the depth direction becomes even easier.

Further, the viewpoint setting receiving unit 14 receives setting of a plurality of new viewpoints $VP_m$ and generates a developed view DV based on the plurality of new viewpoints $VP_m$ that have been received. Therefore, it is possible to move a display area of the developed view DV. Consequently, a structure of interest can be observed from various directions by displaying the structure of interest at various positions in the developed view DV, as described above using Figures 4A through 4D. Hence, observation of the structure in the depth direction becomes even easier.

In the above embodiment, in the three-dimensional image V, a distance between a viewpoint (for example, $VP_1$ or $VP_M$) corresponding to an image-end of the developed view DV and the display position at the image-end of the developed view DV is relatively larger than a distance between a viewpoint (for example, $VP_C$) corresponding to the central part of the developed view DV and the display position at the central part of the developed view DV. However, in the developed view DV, pixels are projected from both of the viewpoints as a line that has the same pixel intervals. Therefore, the perspective of the developed view DV is lost. Therefore, in step #25 of Figure 9, if the developed view generation unit 13 projects the projection pixels $PP_{mn}$ in such a manner that the interval of projection pixels $PP_{mn}$ with respect to the line direction in the developed view DV becomes smaller as the projection pixels $PP_{mn}$ are positioned closer to either end of the developed view DV, the end in the direction of the core line CL in the developed view DV, the developed view DV is generated in the following manner. In the central part of the developed view DV, in which the view-line vector $R_{mn}$ is substantially at a right angle with respect to the tangent vector $TV_m$, the width of one line is wide. In the part at an end of the developed view DV, in which the view-line $R_{mn}$ is at an acute angle or an obtuse angle with respect to the tangent vector $TV_m$, the width of one line is narrow. Therefore, the structure in the developed view DV is displayed in a smaller size as the distance from the central part of the developed view DV becomes longer. Hence, the developed view DV can be displayed perspectively.

In the above embodiment, a user interface for receiving a change in the angle $\theta_{mn}$ at each of the viewpoints $VP_m$ may be provided. Then, the developed-view generation unit 13 may perform the steps from step #23 based on the changed angle $\theta_{mn}$. One of examples of the user interface is a user interface for changing the value of coefficient a in equation $y = ax^2$ in Figure 10. Another example of the user interface is a user interface for displaying an image in which the tangent vector $TV_m$ and the view-line vector $R_{mn}$ at each of the viewpoints $VP_m$ are schematically illustrated (a plurality of view-line vectors $R_{mn}$ may be displayed for each of the viewpoints $VP_m$). Then, the user specifies (selects) at least one view-line vector $R_{mn}$ that he/she wishes to change by using a mouse or the like and changes the angle $\theta_{mn}$ between the specified view-line vector $R_{mn}$ and the tangent vector $TV_m$. If such a user interface is provided, it is not necessary to move the range (viewpoint $VP_m$) for displaying a developed view at the viewpoint movement receiving unit 14. Even if the range is not moved by the viewpoint movement receiving unit 14, the observation target can be observed from a different angle in an area of the developed view DV, the area corresponding to the view-line vector $R_{mn}$, the predetermined angle ($\theta_{mn}$) of which has been changed. Therefore, the operability can be improved and more efficient and flexible observation becomes possible.

Next, a slice-view generation apparatus according to the second embodiment of the present invention will be described. The configuration of a three-dimensional medial image processing system that includes the slice-view generation apparatus is similar to the configuration in the first embodiment (please refer to Figure 6).

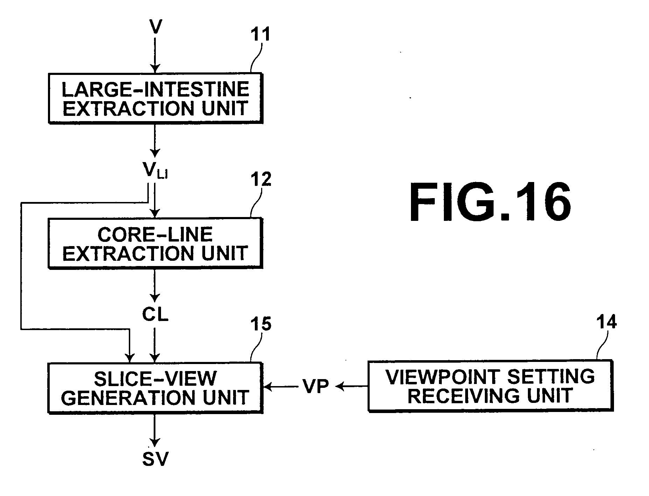

Figure 16 is a block diagram illustrating a part of the image processing workstation 3, the part being related to the large-intestine analysis function for generating a slice view of the large intestine. As illustrated in Figure 16, the developed-view generation unit 13 (please refer to Figure 7) in the first embodiment has been replaced by a slice-view generation unit 15 for generating a slice view SV.

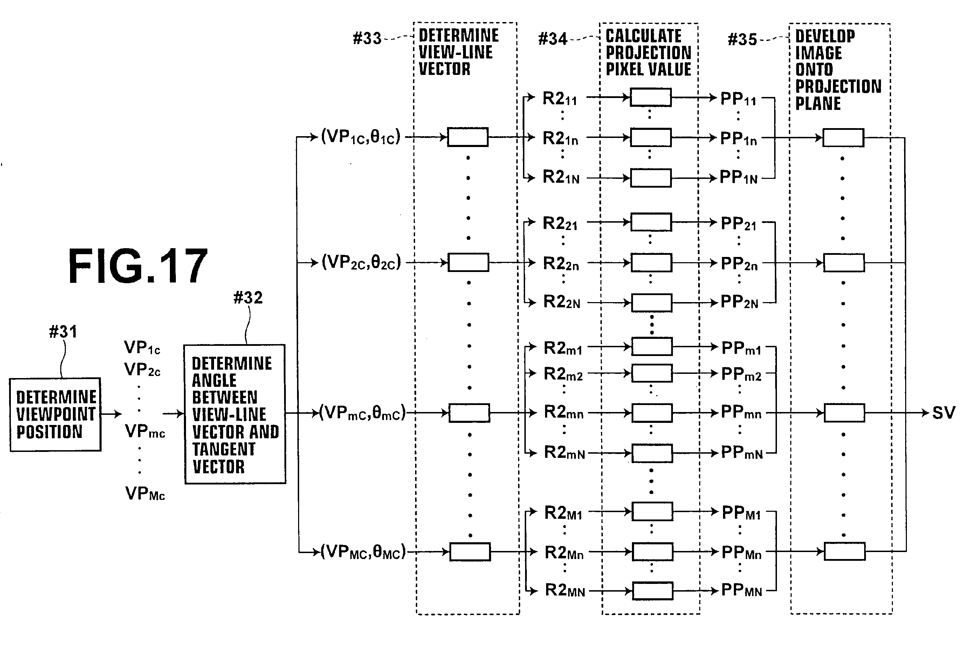

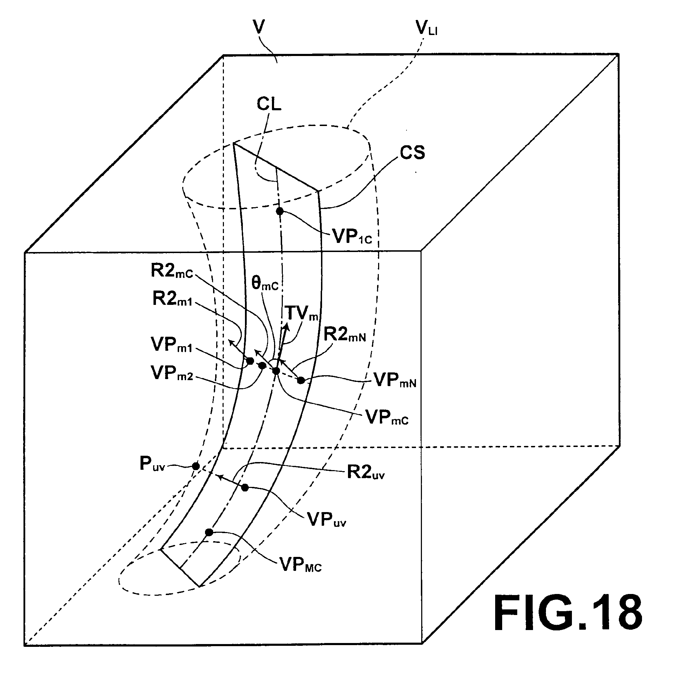

Figure 17 is a schematic diagram illustrating the processing performed by the slice-view generation unit 15 in detail. Further, Figure 18 is a schematic diagram illustrating the manner in which viewpoints and view-line vectors are set by the processing.

First, a plurality of viewpoints ($VP_{mC}$) are set on the core line CL of the large intestine $V_{LI}$ in a manner similar to the first embodiment (step #31).

Then, an angle $\theta_{mC}$ between a view-line vector $R2_{mC}$ (n = 1, 2, ..., N) starting at each of the plurality of viewpoints $VP_{mC}$ on the core line CL and the tangent vector $TV_m$ of the curved line (core line) CL at each of the viewpoints $VP_{mC}$ is determined (step #32). As one of examples of the method for determining the angle $\theta_{mC}$, a method similar to the one adopted in the first embodiment may be adopted (please refer to Figure 10). Information as to to which side of the large intestine $V_{LI}$ the view-line vectors $R2_{mC}$ should be directed is provided as the aforementioned parameter.

Next, for each of the viewpoints $VP_{mC}$ (m = 1, 2, ..., M), viewpoints $VP_{mn}$ (n = 1, 2, ..., N) are set on a line perpendicular to the tangent vector $TV_m$ and the view-line vector $R2_{mC}$. Then, a view-line vector $R2_{mn}$ parallel to the view-line vector $R2_{mC}$ and starting at each of the viewpoints $VP_{mn}$ is determined (step #33). This processing may be performed as parallel processing for each of the viewpoints $VP_{mC}$. In Figure 18, the curbed surface CS is a curved surface that passes all of the viewpoints $VP_{mn}$.

The slice-view generation unit 15 performs parallel processing for each of view-line vectors $R2_{mn}$ in a manner similar to the processing in the first embodiment and determines the pixel value of a projection pixel $PP_{mn}$, onto which the structure on the view-line vector $R2_{mn}$, the structure being represented in the three-dimensional image V, has been projected (step #34).

Finally, for each of the aforementioned lines, in other words, for each group of viewpoints $VP_{mn}$ that have the same value of m, the projection pixel $PP_{mn}$ of each of the view-line vectors $R2_{mn}$ is projected, as a line, onto the projection plane in the arrangement order of the view-line vectors $R2_{mn}$, in other words, in the order of n = 1, 2, ..., N. Accordingly, the slice view SV is generated (step #35). Here, the arrangement order of each line on the projection plane is the arrangement order of the viewpoints $VP_{mn}$, in other words, in the order of m = 1, 2, ..., M. Figure 2 is a schematic diagram illustrating the projection position of each of the projection pixels $PP_{mn}$ in the projection plane (slice view SV).

Here, in the present embodiment, the view-line vectors $R2_{mn}$ (n = 1, 2, ..., N) on the line are parallel to each other. Therefore, the intervals of the view lines $VP_{mn}$ (n = 1, 2, ..., N) with respect to the line direction are exactly the same as the intervals of the projection pixels $PP_{mn}$ (n = 1, 2, ..., N) in the slice view SV.

Meanwhile, with respect to the vertical direction (direction of the core line) of the slice view SV, in other words, projection positions of viewpoints $VP_{mC}$ (the arrangement direction of m = 1, 2, ..., M) should be arranged in the following manner, for example. The line at viewpoint $VP_{1C}$ is the highest portion of the slice view SV and the line at viewpoint $VP_{NC}$ is the lowest portion of the slice view SV. Then, the lines at viewpoints $VP_{2C}$, $VP_{3C}$, ..., $VP_{(M-1)C}$ should be arranged based on the interval of the viewpoints $VP_{mC}$ in the coordinate space of the three-dimensional medical image V.

The workflow using the large intestine analysis function including the slice-view generation processing of the present invention is similar to that of the first embodiment.

As described above, the slice-view generation apparatus according to the second embodiment of the present invention may adopt a method for setting the angle $\theta_{mn}$ of the view-line vector that is similar to the method adopted in the first embodiment. Further, it is possible to achieve an-advantageous effect similar to the effect achieved in the first embodiment.

Further, in a manner similar to the first embodiment, the projection pixels $PP_{mn}$ may be projected in such a manner that the intervals of the projection pixels $PP_{mn}$ with respect to the line direction of the slice view SV becomes smaller as the projection pixels $PP_{mn}$ are positioned closer to either end of the slice view SV in the direction of the core line CL. Alternatively, a user interface for receiving a change in the angle $\theta_{mn}$ at each of the viewpoints $VP_{mn}$ may be provided.

Further, the configuration of the system, the flow of processing, the user interface and the like in the aforementioned embodiments may be modified in various manners without departing from the scope of the present invention. Further, the aforementioned embodiments have been described only as examples. Therefore, none of the descriptions should be used to limit the technical scope of the present invention.

For example, it is not necessary that a part of or the entire processing by the large intestine extraction unit 11, the core line extraction unit 12, and the developed-view generation unit 13 / the slice-view generation unit 15 is performed at the image processing workstation 3. A separate image processing server (not illustrated) may be connected to the present system through the network 9 and the aforementioned processing may be performed by the image processing server based on a request of the processing from the image processing workstation 3.

**Claims**

1. A projection image generation apparatus **characterized by** comprising:

a projection image generation means (13) for determining, at each of a plurality of viewpoints ($VP_m$) on an arbitrary curved line (CL) in a three-dimensional image (V), the pixel values of projection pixels ($PP_{mn}$) onto which a structure on a plurality of view-line vectors ($R_{mn}$), the structure being represented by the three-dimensional image, is projected by using information about images on the view-line vectors and/or images in the vicinities of the view-line vectors for the plurality of view-line vectors that have a starting point at the viewpoint and that form a predetermined angle ($\theta_{mn}$) with respect to a tangential line ($TL_m$) of the curved line at the starting point and for generating a projection image (DV) in which each of the projection pixels is arranged on a projection plane in such a manner that the arrangement order of the viewpoints and the arrangement order of the plurality of view-line vectors at each of the viewpoints are maintained, wherein the predetermined angle with respect to at least a part of the view-line vectors is set at an acute angle or an obtuse angle.

2. A projection image generation apparatus **characterized by** comprising:

a projection image generation means (15) for determining the pixel values of projection pixels ($PP_{mn}$) onto which a structure on a plurality of view-line vectors is projected by using information about images on the view-line vectors and/or images in the vicinities of the view-line vectors for the plurality of view-line vectors that have a starting point at each of viewpoints ($VP_m$) on an arbitrary curved surface (CS) in a three-dimensional image (V), that form a predetermined angle ($\theta_{mn}$) with respect to a tangential line ($TL_{mn}$) of the curved surface at the starting point and that are directed toward a peripheral direction on one side of the curved surface and for generating a projection image (SV) in which each of the projection pixels is arranged on a projection plane in such a manner that the arrangement order of the viewpoints is maintained, wherein the predetermined angle ($\theta_{mn}$) with respect to at least a part of the view-line vectors ($R2_{mn}$) is set at an acute angle or an obtuse angle.

3. A projection image generation apparatus, as defined in Claim 1 or 2, **characterized in that** the predetermined angle is determined in such a manner that an angle ($\theta_{mn}$) formed between a tangent vector ($TV_m$) in the direction of the tangential line of the curved line at the viewpoint corresponding to the projection pixel on one-end side in the direction of the curved line in the projection image, the tangent vector having a direction along the curved line from the viewpoint corresponding to the projection pixel on the one-end side toward the viewpoint corresponding to the projection pixel on the-other-end side in the direction of the curved line in the projection image, and the view-line vector at the viewpoint corresponding to the projection pixel on the one-end side is an obtuse angle, and that an angle formed between the tangent vector and the view-line vector at the viewpoint corresponding to the projection pixel on the-other-end side is an acute angle, and that an angle formed between the tangent vector and the view-line vector at the viewpoint corresponding to the projection pixel at a central part in the direction of the curved line in the projection image is substantially a right angle.

4. A projection image generation apparatus, as defined in any one of Claims 1 to 3, **characterized by** further comprising a viewpoint setting receiving means (14) for receiving setting of the plurality of viewpoints, wherein the projection image generation means generates the projection image based on the plurality of viewpoints received by the viewpoint setting receiving means.

5. A projection image generation apparatus, as defined in any one of Claims 1 to 4, **characterized by** further comprising an angle change receiving means for receiving a change in the predetermined angle for at least a part of the view-line vectors, wherein the projection image generation means generates the projection image based on the predetermined angle that has been received by the angle change receiving means.

6. A projection image generation apparatus, as defined in any one of Claims 1 to 5, **characterized in that** in the projection image, the interval of the projection pixels in a direction vertical to the direction of the curved line becomes shorter as the projection pixels are located closer to either end side of the projection image in the direction of the curved line.

7. A projection image generation apparatus, as defined in any one of Claims 1 to 5, **characterized in that** the curved line is a core line passing through a central part of a tubular structure.

8. A projection image generation method **characterized by** comprising the steps of:

determining, at each of a plurality of viewpoints ($VP_m$) on an arbitrary curved line (CL) in a three-dimensional image (V), the pixel values of projection pixels ($PP_{mn}$) onto which a structure on a plurality of view-line vectors ($R_{mn}$), the structure being represented by the three-dimensional image, is projected by using information about images on the view-line vectors and/or images in the vicinities of the view-line vectors for the plurality of view-line vectors that have a starting point at the viewpoint and that form a predetermined angle ($\theta_{mn}$) with respect to a tangential line ($TL_m$) of the curved line at the starting point; and

generating a projection image (DV) in which each of the projection pixels is arranged on a projection plane in such a manner that the arrangement order of the viewpoints and the arrangement order of the plurality of view-line vectors at each of the viewpoints are maintained, wherein the predetermined angle with respect to at least a part of the view-line vectors is set at an acute angle or an obtuse angle.

9. A projection image generation method **characterized by** comprising the steps of:

determining the pixel values of projection pixels ($PP_{mn}$) onto which a structure on a plurality of view-line vectors is projected by using information about images on the view-line vectors and/or images in the vicinities of the view-line vectors for the plurality of view-line vectors that have a starting point at each of viewpoints ($VP_m$) on an arbitrary curved surface (CS) in a three-dimensional image (V), that form a predetermined angle ($\theta_{mn}$) with respect to a tangential line ($TL_{mn}$) of the curved surface at the starting point and that are directed toward a peripheral direction on one side of the curved surface; and

generating a projection image (SV) in which each of the projection pixels is arranged on a projection plane in such a manner that the arrangement order of the viewpoints is maintained, wherein the predetermined angle with respect to at least a part of the view-line vectors is set at an acute angle or an obtuse angle.

10. A computer-readable recording medium, **characterized by** being recorded therein a projection image generation program that causes a computer to execute the steps of:

determining, at each of a plurality of viewpoints ($VP_m$) on an arbitrary curved line (CL) in a three-dimensional image (V), the pixel values of projection pixels ($PP_{mn}$) onto which a structure on a plurality of view-line vectors, the structure being represented by the three-dimensional image, is projected by using information about images on the view-line vectors and/or images in the vicinities of the view-line vectors for the plurality of view-line vectors ($R_{mn}$) that have a starting point at the viewpoint and that form a predetermined angle ($\theta_{mn}$) with respect to a tangential line ($TL_m$) of the curved line at the starting point; and

generating a projection image (DV) in which each of the projection pixels is arranged on a projection plane in such a manner that the arrangement order of the viewpoints and the arrangement order of the plurality of view-line vectors at each of the viewpoints are maintained, wherein the predetermined angle with respect to at least a part of the view-line vectors is set at an acute angle or an obtuse angle.

11. A computer-readable recording medium, **characterized by** being recorded therein a projection image generation program that causes a computer to execute the steps of:

determining the pixel values of projection pixels ($PP_{mn}$) onto which a structure on a plurality of view-line vectors is projected by using information about images on the view-line vectors and/or images in the vicinities of the view-line vectors for the plurality of view-line vectors that have a starting point at each of viewpoints ($VP_m$) on an arbitrary curved surface (CS) in a three-dimensional image (V), that form a predetermined angle ($\theta_{mn}$) with respect to a tangential line ($TL_{mn}$) of the curved surface at the starting point and that are directed toward a peripheral direction on one side of the curved surface; and

generating a projection image (SV) in which each of the projection pixels is arranged on a projection plane in such a manner that the arrangement order of the viewpoints is maintained, and wherein in the step, the predetermined angle with respect to at least a part of the view-line vectors is set at an acute angle or an obtuse angle.

# FIG.1

**FIG.2**

# FIG.3A

CL

$\theta_{1n}$

TV$_1$

R$_{1n}$   VP$_1$

$\theta_{Cn}$

TV$_C$

R$_{Cn}$   VP$_C$

$\theta_{Mn}$

TV$_M$

R$_{Mn}$   VP$_M$

# FIG.3B

# FIG.3C

VIEW
LINE

EP 1 983 487 A2

FIG.4A

FIG.4B

FIG.4C

FIG.4D

# FIG.5

**1**

MODALITY

**2**

IMAGE STORAGE
SERVER

**9**

**3**

IMAGE
PROCESSING WS

# FIG.6

V

**11**

LARGE-INTESTINE
EXTRACTION UNIT

$V_{LI}$

**12**

CORE-LINE
EXTRACTION UNIT

# FIG.7

CL

**13**

DEVELOPED-VIEW
GENERATION UNIT

VP

**14**

VIEWPOINT SETTING
RECEIVING UNIT

DV

FIG.8A

FIG.8B

# FIG.9

DETERMINE VIEWPOINT POSITION #21

DETERMINE ANGLE BETWEEN VIEW-LINE VECTOR AND TANGENT VECTOR #22

#23 DETERMINE VIEW-LINE VECTOR

#24 CALCULATE PROJECTION PIXEL VALUE

#25 DEVELOP IMAGE ONTO PROJECTION PLANE

$VP_1$
$VP_2$
$VP_m$
$VP_M$

$(VP_1, \theta_1)$
$(VP_2, \theta_2)$
$(VP_m, \theta_m)$
$(VP_M, \theta_M)$

$R_{11}$ → $PP_{11}$
$R_{1n}$ → $PP_{1n}$
$R_{1N}$ → $PP_{1N}$

$R_{21}$ → $PP_{21}$
$R_{2n}$ → $PP_{2n}$
$R_{2N}$ → $PP_{2N}$

$R_{m1}$ → $PP_{m1}$
$R_{m2}$ → $PP_{m2}$
$R_{mn}$ → $PP_{mn}$
$R_{mN}$ → $PP_{mN}$

$R_{M1}$ → $PP_{M1}$
$R_{Mn}$ → $PP_{Mn}$
$R_{MN}$ → $PP_{MN}$

DV

EP 1 983 487 A2

FIG.10

# FIG.11A

# FIG.11B

# FIG.11C

# FIG.12A

# FIG.12B

# FIG.13

START

**#1**
SELECT IMAGE TO BE PROCESSED

**#2**
SELECT IMAGE ANALYSIS METHOD
(SELECT LARGE INTESTINE ANALYSIS)

**#3**
EXTRACT LARGE INTESTINE

**#4**
EXTRACT AND CORRECT CORE LINE
OF LARGE INTESTINE

**#5**
DETERMINE INITIAL DEVELOPMENT
POSITION (VIEWPOINT)

**#6**
GENERATE DEVELOPED VIEW

**#7**
YES — MOVE DEVELOPMENT POSITION?

NO

END

# FIG.14A

# FIG.14B

LI

FO

PO

DEVELOP

FO

PO

**FIG.15**

V

**11**

LARGE–INTESTINE
EXTRACTION UNIT

$V_{LI}$

**12**

# FIG.16

CORE–LINE
EXTRACTION UNIT

CL

**15**

**14**

SLICE–VIEW
GENERATION UNIT ← VP ← VIEWPOINT SETTING
RECEIVING UNIT

SV

# FIG.17

EP 1 983 487 A2

V    V$_{LI}$

CL

CS

VP$_{1C}$

R2$_{mC}$    θ$_{mC}$

R2$_{m1}$    TV$_m$

VP$_{m1}$    R2$_{mN}$

VP$_{m2}$    VP$_{mN}$

VP$_{mC}$

P$_{uv}$    R2$_{uv}$

VP$_{uv}$

VP$_{MC}$

**FIG.18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8249492 A
- JP 2006065397 A
- JP 2004243373 A